# EUROPÄISCHE PATENTSCHRIFT

(11) **EP 4 158 758 B1**
(45) Veröffentlichungstag und Bekanntmachung des Hinweises auf die Patenterteilung: **20.03.2024**
(21) Anmeldenummer: 21726902.6
(22) Anmeldetag: 18.05.2021
(51) Int. Cl.: H02K 5/10, H02K 7/116, F16H 57/029, F16H 57/031

(54) **ANTRIEB MIT EINEM GEHÄUSE, EINER ADAPTERPLATTE UND EINER ABDECKHAUBE**
DRIVE HAVING A HOUSING, AN ADAPTER PLATE AND A COVERING HOOD
ENTRAÎNEMENT DOTÉ D'UN CARTER, D'UNE PLAQUE D'ADAPTATION ET D'UN CAPOT DE RECOUVREMENT

(30) Priorität: 02.06.2020 DE 102020003303
(43) Veröffentlichungstag der Anmeldung: 05.04.2023
(73) Patentinhaber: SEW-EURODRIVE GmbH & Co. KG, 76646 Bruchsal (DE)
(72) Erfinder: DENEFLEH, Roland, 64683 Einhausen (DE); KUTSCH, Stefan, 76684 Tiefenbach (DE)
(86) Internationale Anmeldenummer: PCT/EP2021/063163
(87) Internationale Veröffentlichungsnummer: WO 2021/244848

(56) Entgegenhaltungen:
- EP-A1- 3 534 508
- WO-A1-2010/012347

## Beschreibung

Die Erfindung betrifft einen Antrieb mit einem Gehäuse, einer Adapterplatte und einer Abdeckhaube.

Ein von einem Elektromotor angetriebenes Getriebe ist als Antrieb allgemein bekannt.

Aus der DE 10 2007 002 527 A1 ist als nächstliegender Stand der Technik ein Dichtelement bekannt.

**Aus der** EP 3 534 508 A1 **ist als nächstliegender Stand der Technik ein elektrischer Aktuator bekannt.**

**Aus der** WO 2010/012347 A1 **ist eine Anordnung zum Abdichten einer Ausnehmung in einem Grundkörper bekannt.**

Der Erfindung liegt daher die Aufgabe zugrunde, einen Antrieb weiterzubilden, wobei ein sicherer Betrieb einfach und kostengünstig ausführbar sein soll.

Erfindungsgemäß wird die Aufgabe bei dem Antrieb nach den in Anspruch 1 angegebenen Merkmalen gelöst.
Wichtige Merkmale der Erfindung bei dem Antrieb mit einem Gehäuse, einer Adapterplatte und einer Abdeckhaube, sind, dass am Gehäuse eine ebene Auflagefläche ausgebildet ist, insbesondere zum Auflegen der Abdeckhaube,
wobei die Adapterplatte am Gehäuse befestigt ist,
wobei eine erste Dichtung, insbesondere O-Ring, am Außenumfang der Adapterplatte aufgenommen ist und zwischen der Abdeckhaube und der Adapterplatte angeordnet ist, insbesondere zur Abdichtung,
wobei eine zweite Dichtung insbesondere O-Ring oder Flachdichtung, an der der Auflagefläche zugewandten Seite der Adapterplatte aufgenommen und/oder befestigt ist,
wobei die zweite Dichtung zwischen der Adapterplatte und der Auflagefläche angeordnet ist, insbesondere zur Abdichtung.

Von Vorteil ist dabei, dass ein sicherer Betrieb gewährleistet ist, indem ein drehendes Teil abgedeckt ist mittels der Abdeckhaube und somit ein Berührschutz gegen das drehende Teil erreicht ist. Die Abdeckhaube ist an einer ebenen Fläche des Gehäuses anbringbar und zwar unter Herstellung von Dichtheit. Dies wird sicher und einfach bei der Herstellung erreicht, indem Gewindebohrungen in die ebene Fläche, also Auflagefläche, eingebracht werden und durch eine Adapterplatte hindurchgeführte Schrauben in die Gewindebohrungen eingeschraubt werden, welche die Adapterplatte zur ebenen Fläche hindrücken. Somit ist die Adapterhaube über die Adapterplatte überstülpbar und mittels einer ersten Dichtung dicht verbindbar einerseits und andererseits auch kraftschlüssig verbindbar mit der Adapterplatte. Zur weiteren Sicherung ist auch ein Laschenbereich der Abdeckhaube mittels einer zusätzlichen Schraube, die in eine zusätzliche, in der Auflagefläche eingebrachte Gewindebohrung eingeschraubt ist, befestigbar. Auf diese Weise ist auch eine formschlüssige zusätzliche Absicherung der Abdeckhaube bewirkbar. In Weiterbildung ist die Abdeckhaube durch eine beim Anschrauben der zusätzlichen Schraube bewirkten elastischen Verformung des Laschenbereichs an die Auflagefläche andrückbar. Hierzu ist eine Formschräge am Laschenbereich ausbildbar und verwendbar.

Erfindungsgemäß ist eine zweite Dichtung an der Adapterplatte anbringbar, mit welcher die Adapterplatte dicht mit der Auflagefläche verbindbar ist. Auf diese Weise ist somit der von der Abdeckhaube umfasste Raumbereich abgedichtet zur Umgebung hin.

Da die Adapterplatte als Kunststoffspritzgussteil herstellbar ist, sind in einer Weiterbildung auch die erste und/oder zweite Dichtung einstückig und/oder einteilig zusammen mit der Adapterplatte herstellbar.

Bei einer vorteilhaften Ausgestaltung umfasst der Antrieb ein von einem Elektromotor angetriebenes Getriebe,
insbesondere wobei das Gehäuse gehäusebildend für den Elektromotor und das Getriebe ist. Von Vorteil ist dabei, dass der Antrieb als Kompaktantrieb ausbildbar ist, wobei das Gehäuse ein zentrales Gehäuseteil aufweist, welches nicht nur zumindest ein Lager der Rotorwelle des Elektromotors, sondern zumindest auch ein Lager oder beide Lager der abtreibenden Welle des Getriebes aufnimmt. Somit ist eine Zentrierung des Motors zum Getriebe hin mittels des zentralen Gehäuseteils ermöglicht. Insbesondere ist die Rotorwelle parallel zur als Hohlwelle ausgeführten abtreibenden Welle des Getriebes anordenbar und der von dem Rotor überdeckte axiale Bereich überlappend mit dem von der abtreibenden Welle überdeckten axialen Bereich anordenbar.

Bei einer vorteilhaften Ausgestaltung ragt eine Welle des Antriebs in einen von der Abdeckhaube umgebenen Raumbereich hinein,
insbesondere wobei die Welle die abtreibende Welle des Getriebes ist. Von Vorteil ist dabei, dass ein Berührschutz erreichbar ist. Insbesondere ist die in die abtreibende Welle des Antriebs, also des Getriebes eingesteckte anzutreibende Vollwelle einer vom Antrieb anzutreibenden Maschine mittels einer Schrumpfscheibe verbindbar, die innerhalb des von der Abdeckhaube umgebenen Raumbereichs angeordnet ist.

Bei einer vorteilhaften Ausgestaltung ragt die Welle durch eine Ausnehmung des Gehäuses und/oder durch eine Ausnehmung der Adapterplatte hindurch. Von Vorteil ist dabei, dass die Welle herausragen darf und somit die kraftschlüssige Verbindung mittels Schrumpfscheibe außerhalb des Gehäuses bewirkbar ist.

Bei einer vorteilhaften Ausgestaltung verbindet eine auf die Welle aufgesteckte Schrumpfscheibe die Welle mit einer in die Welle eingesteckten weiteren Welle kraftschlüssig,
insbesondere wobei die Schrumpfscheibe in dem von der Abdeckhaube umgebenen Raumbereich angeordnet ist. Von Vorteil ist dabei, dass ein Berührschutz einfache und sicher herstellbar ist.

Bei einer vorteilhaften Ausgestaltung ist die Adapterplatte als Kunststoffspritzgussteil gefertigt. Von Vorteil ist dabei, dass eine einfache und kostengünstige Herstellung ermöglicht ist.

Bei einer vorteilhaften Ausgestaltung ist die Abdeckhaube als Kunststoffspritzgussteil gefertigt. Von Vorteil ist dabei, dass eine einfache und kostengünstige Herstellung ermöglicht ist.

Bei einer vorteilhaften Ausgestaltung ist die Adapterplatte von Schraubenköpfen von in Gewindebohrungen der Auflagefläche eingeschraubten, durch die Adapterplatte durchgehenden Schrauben zur Auflagefläche hingedrückt,
insbesondere wobei das von den Gewindebohrungen gebildete Bohrbild eine diskrete Rotationssymmetrie aufweist, insbesondere welche die Adapterplatte nicht aufweist, insbesondere wobei die Adapterplatte eine Vorzugsrichtung aufweist, entlang derer die Adapterplatte ihre größte Ausdehnung hat,
insbesondere wobei die Vorzugsrichtung parallel zu der die an der Abdeckhaube vorgesehene, insbesondere bewirkte, Berührfläche enthaltenden Ebene ausgerichtet ist. Von Vorteil ist dabei, dass eine einfache sichere Befestigung der Adapterplatte erreichbar ist, welche ein Aufsetzen der Abdeckhaube auf einer ebenen Auflagefläche ermöglicht und die Verbindung zwischen der Auflagefläche und der Abdeckhaube abdichtet. Außerdem ist der unsymmetrische Außenumfang der Adapterplatte angepasst an den ebensolchen Innenumfang der Adapterhaube, so dass eine Verdrehung verhindert ist.

Bei einer vorteilhaften Ausgestaltung weist die Adapterplatte voneinander beabstandete, durch die Adapterplatte, insbesondere in Normalenrichtung zur die an der Abdeckhaube vorgesehene, insbesondere bewirkte, Berührfläche enthaltenden Ebene, durchgehende durchgehende Ausnehmungen auf,
insbesondere wobei in Umfangsrichtung zwischen den Ausnehmungen die die Adapterplatte zur Auflagefläche hindrückenden Schrauben angeordnet sind. Von Vorteil ist dabei, dass eine erhöhte Elastizität der Adapterplatte bewirkbar ist und somit eine verbesserte Dichtigkeit erreichbar ist.

Bei einer vorteilhaften Ausgestaltung ist die erste Dichtung in einer am Außenumfang der Adapterplatte eingebrachten ersten Nut, insbesondere in Umfangsrichtung ununterbrochen verlaufenden ersten Nut, aufgenommen,
insbesondere wobei die erste Nut nach radial außen geöffnet ist und/oder wobei die erste Dichtung nach radial außen aus der ersten Nut hervorragt. Von Vorteil ist dabei, dass die erste Nut dem nur eine einzige Spiegelsymmetrie und keine Rotationssymmetrie aufweisenden Außenumfang folgt. Dabei ist die Nut nach radial außen geöffnet, so dass die erste Dichtung, insbesondere ein O-Ring, von radial außen kommend in die erste Nut einschiebbar ist, so dass diese erste Dichtung nur zum Teil aus der Nut hervorragt. Auf diese Weise ist die erste Dichtung sicher befestigt und stellt die Dichtheit zur Abdeckhaube hin her.

Bei einer vorteilhaften Ausgestaltung ist die zweite Dichtung in einer an der der Auflagefläche zugewandten Seite der Adapterplatte eingebrachten zweiten Nut aufgenommen, welche in Umfangsrichtung ununterbrochen verläuft,
wobei die zweite Nut zur Auflagefläche hin geöffnet ist und /oder wobei die zweite Dichtung aus der zweiten Nut zur Auflagefläche hin hervorragt. Von Vorteil ist dabei, dass die zweite Nut in eine ansonsten eben ausgeführte Seitenfläche der Adapterplatte eingebracht ist und zur Auflagefläche hin geöffnet ist. Somit ist auch in diese zweite Nut ein O-Ring einführbar, der zur Auflagefläche hin hervorragt und abdichtet.

Bei einer vorteilhaften Ausgestaltung ist an der Abdeckhaube ein radial hervorragender Laschenbereich ausgeformt,
durch welchen eine Schraube hindurchragt, deren Gewindebereich in eine in die Auflagefläche eingebrachte Gewindebohrung eingeschraubt ist und deren Schraubenkopf den Laschenbereich zur Auflagefläche hindrückt. Von Vorteil ist dabei, dass die Abdeckhaube formschlüssig sicherbar ist an der Auflagefläche.

Bei einer vorteilhaften Ausgestaltung weist der Laschenbereich eine mit zunehmendem Radialabstand zur Drehachse der Welle zunehmende Wandstärke auf,
insbesondere wobei ein von der Auflagefläche abgewandter Oberflächenbereich des Laschenbereichs im entspannten Zustand der Abdeckhaube, insbesondere also vor dem Aufsetzen auf die und Verbinden mit der Adapterplatte, als ebene Fläche ausgeformt ist, welche parallel zur an der Abdeckhaube zur Berührung mit der Auflagefläche vorgesehenen Berührfläche ausgerichtet ist,
insbesondere wobei beim Aufstecken der Abdeckhaube auf die Auflagefläche und nachfolgendem Anziehen der Schraube der Laschenbereich derart angedrückt und elastisch verformt wird, dass die Abdeckhaube mit ihrer Berührfläche an der Auflagefläche anliegt. Von Vorteil ist dabei, dass mittels des Wandstärkeverlaufs des Laschenbereichs ein zwischen dem Laschenbereich und der Auflagefläche zur Drehachse hin immer dicker werdender freier Raumbereich verfügbar ist, der beim Anschrauben der Schraube den Laschenbereich zur Auflagefläche hin drückt und somit den Raumbereich vermindert und/oder verdrängt, wodurch der Laschenbereich elastisch verformt wird und dadurch die Abdeckhaube an die Auflagefläche angedrückt wird, insbesondere in Umfangsrichtung vollständig und/oder ununterbrochen. Denn der freie Raumbereich wird von einem Teil des Laschenbereichs überbrückt und die Schraube drückt den so gebildeten Brückenbereich des Laschenbereichs an die Auflagefläche, wobei der Laschenbereich elastisch verformt wird und daher mittels des Brückenbereichs die restliche Abdeckhaube an die Auflagefläche andrückt.

Bei einer vorteilhaften Ausgestaltung weist die Adapterplatte eine radial hervorragende Auskragung auf,
wobei ein Randbereich der Abdeckhaube zwischen der Auskragung und einer die Auflagefläche begrenzenden domartigen Erhebung des Gehäuseteils eingefädelt und aufgenommen ist. Von Vorteil ist dabei, dass die Adapterplatte eine Vorzugsrichtung aufweist, so dass bei der Montage die gewünschte Ausrichtung leicht erkennbar ist. Außerdem ist die Auskragung zu einem domartig ausgeformten Bereich des Gehäuses hin orientierbar und der Rand der Abdeckhaube zwischen die Auskragung und den domartig ausgeformten Bereich einführbar oder sogar einklemmbar. Dadurch ist die Abdeckhaube noch fester und sicherer am Gehäuse befestigt.

Bei einer vorteilhaften Ausgestaltung weist die Adapterplatte in dem, insbesondere bezogen auf die Drehachse der Welle, von der Auskragung überdeckten Umfangswinkelbereich den größten Durchmesser auf, insbesondere innerhalb einer Ebene, deren Normale parallel zur Drehachse der Welle ausgerichtet ist. Von Vorteil ist dabei, dass eine Vorzugsrichtung
ausgeformt ist und somit bei der Montage die gewünschte Ausrichtung leicht erkennbar ist. Außerdem ist die Auskragung zu einem domartig ausgeformten Bereich des Gehäuses hin orientierbar und der Rand der Abdeckhaube zwischen die Auskragung und den domartig ausgeformten Bereich einführbar oder sogar einklemmbar. Dadurch ist die Abdeckhaube noch fester und sicherer am Gehäuse befestigt.

Bei einer vorteilhaften Ausgestaltung ist der maximale Radialabstand, insbesondere zur Drehachse der Welle, als Funktion des Umfangswinkels, insbesondere innerhalb einer oder der Ebene, deren Normale parallel zur Drehachse der Welle ausgerichtet, ein absolutes und mehrere lokale Maxima aufweist, insbesondere im Bereich zwischen 0° und 360°,
wobei jeweils zwei in Umfangsrichtung zueinander nächstbenachbarte Maxima einen Winkelabstand von jeweils 45° zueinander aufweisen,
insbesondere ein absolutes und sieben lokale Maxima, wobei zwei jeweils in Umfangsrichtung zueinander nächstbenachbarte Maxima einen Winkelabstand von 45° zueinander aufweisen. Von Vorteil ist dabei, dass die Abdeckhaube nur in einer einzigen zur Adapterplatte relativen Orientierung aufsteckbar ist und somit ein sicheres Abdichten mittels der ersten Dichtung, die dann in Umfangsrichtung vollständig umlaufend, also ununterbrochen, an der Abdeckhaube anliegt, gewährleistbar ist.

Bei einer vorteilhaften Ausgestaltung liegt die erste Dichtung in Umfangsrichtung vollständig umlaufend und/oder in Umfangsrichtung ununterbrochen an der Abdeckhaube an. Von Vorteil ist dabei, dass eine hohe Schutzart erreichbar ist. Außerdem ist Öl, das bei einer eventuellen Leckage eines zur Abdeckhaube hin an der abtreibenden Welle des Getriebes angeordneten Wellendichtrings in den von der Abdeckhaube umgebenen Raumbereich eindringt, sicher getrennt von der Umgebung mittels der ersten und zweiten Abdichtung.

Die Erfindung wird nun anhand von schematischen Abbildungen näher erläutert:

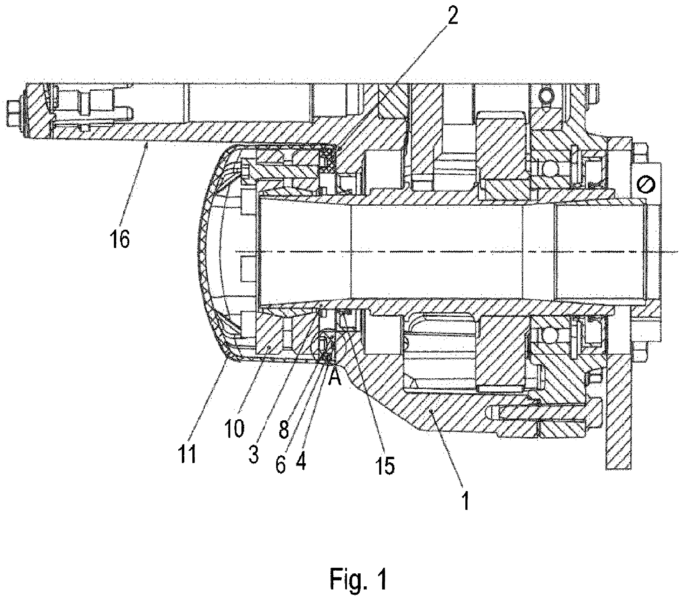

In der Figur 1 ist ein Querschnitt durch einen Teilbereich eines Antriebs dargestellt.

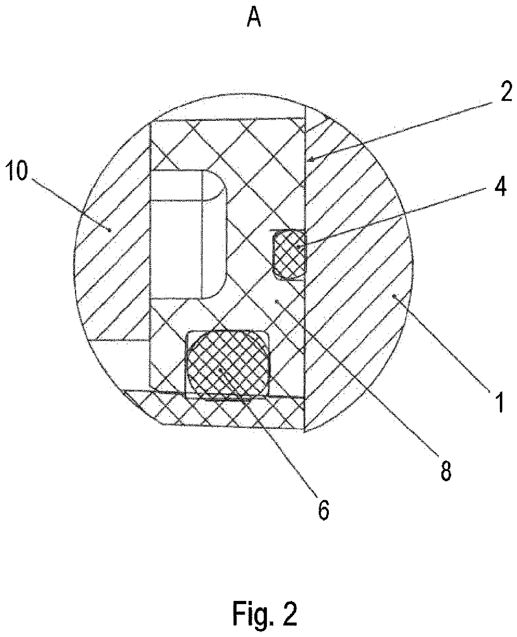

In der Figur 2 ist ein vergrößerter Ausschnitt dargestellt.

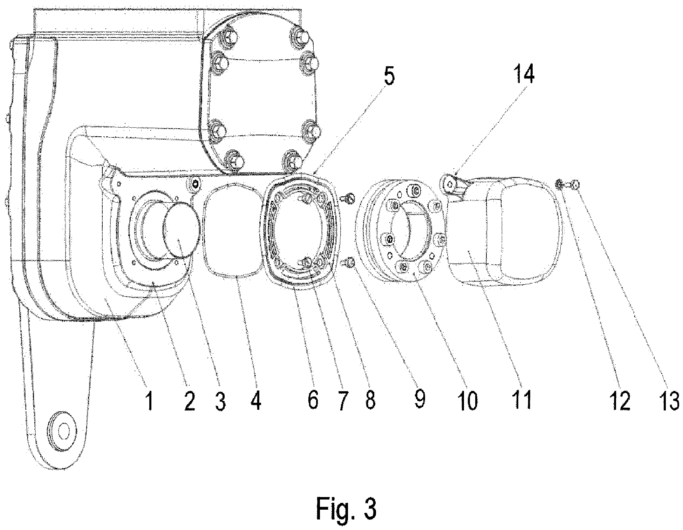

In der Figur 3 ist eine Schrägansicht auf den Antrieb mit explodiert dargestellten Teilen des Teilbereichs gezeigt.

Wie in den Figuren dargestellt, weist der Antrieb eine abtreibende Welle 3 eines von einem Elektromotor angetriebenen Getriebes auf. Vorzugsweise ist der Elektromotor mit dem Getriebe in einem gemeinsamen Gehäuse 1 integriert angeordnet.

Die Welle 3 ist beispielhaft als Hohlwelle ausgeführt, so dass die Vollwelle oder Hohlwelle einer anzutreibenden Vorrichtung in die Hohlwelle einsteckbar und mittels einer Schrumpfscheibe 10, welche auf die Welle 3 aufgesteckt ist, kraftschlüssig verbindbar ist.

Die Welle der Vorrichtung wird von einem ersten Endbereich der Welle 3 herkommend in die Welle 3 eingeschoben und durch Aufschrumpfen der Schrumpfscheibe 10 kraftschlüssig geklemmt.

Dabei überlappt der von der Welle der Vorrichtung überdeckte axiale Bereich mit der von der Schrumpfscheibe 10 in axialer Richtung überdeckte Bereich oder enthält diesen ganz.

Das Aufschrumpfen wird durch Anziehen der axial gerichteten Schrauben der Schrumpfscheibe bewirkt, indem die beiden Scheiben beim Anziehen aufeinander zu bewegt werden und dabei über die kegelförmigen Pressflächen den auf der Welle 3 aufliegenden Klemmring der Schrumpfscheibe 10 zusammendrücken.

Zur Verhinderung der Berührung drehender Teile ist eine Abdeckhaube 11 am Antrieb vorgesehen.

Diese Abdeckhaube umgibt die Schrumpfscheibe 10 und liegt an einer Auflagefläche 2 des Gehäuses 1 an, wobei auch ein möglichst enger Spalt zwischen der Auflagefläche 2 und der Abdeckhaube 11 auftreten kann, also nicht unbedingt Berührung vorliegen muss.

Die Auflagefläche 2 ist vorzugsweise eben ausgeführt.

Zwar ist an der Abdeckhaube ein, auf die Drehachse der Welle 3 bezogen, radial hervorragender Laschenbereich 14 ausgebildet, durch den eine Schraube 13 hindurchragt, deren Gewindebereich in eine in die Auflagefläche 2 eingebrachte Gewindebohrung eingeschraubt ist und deren Schraubenkopf den Laschenbereich 14 auf die Auflagefläche 2 drückt; aber dieses Andrücken der Abdeckhaube 11 ist nicht mit hoher Sicherheit ausführbar.

Zur Erreichung einer sicheren Abdichtung ist eine Adapterplatte 8 von durch die Adapterplatte 8 durchgehenden Schrauben (7, 9) ans Gehäuse 1 angedrückt. Dabei drücken die Schraubenköpfe der Schauben (7, 9) die Adapterplatte 8 zur Auflagefläche 2 hin, wobei eine zweite Dichtung, 4, insbesondere Flachdichtung oder O-Ring, an der Adapterplatte 8 aufgenommen ist und auf die Auflagefläche 2 drückt. Die zweite Dichtung 4 ist in bezogen auf die Drehachse der Welle 3 Umfangsrichtung umlaufend, insbesondere unterbrechungsfrei umlaufend angeordnet.

Die zweite Dichtung 4 ist also zwischen der Adapterplatte 8 und der Auflagefläche 2 angeordnet und elastisch verformt, so dass der radial innerhalb der zweiten Dichtung 4 angeordnete Bereich zwischen der Adapterplatte 8 und der Auflagefläche 2 zur Umgebung hin abgedichtet ist.

Vorzugsweise ist an der der Auflagefläche 2 zugewandten Seite der Adapterplatte 8 eine in Umfangsrichtung umlaufende Nut eingebracht, in welche ein O-Ring als zweite Dichtung zumindest teilweise eingepresst und/oder eingeführt ist.

Die Schrauben (7, 9) sind in die Auflagefläche 2 eingebrachte Gewindebohrungen eingeschraubt. Diese Gewindebohrungen bilden ein Bohrbild, welches eine diskrete 90° Drehsymmetrie bezogen auf die Drehachse der Welle 3 aufweist. Die Adapterplatte 8 wäre also in vier Orientierungen verbindbar mit dem Gehäuse 1.

Der Außenumfang der Adapterplatte weist jedoch keine diskrete Rotationssymmetrie auf.

Somit ist eine Vorzugsrichtung mit bloßem Auge erkennbar.

Am Außenumfang ist eine Nut eingebracht, die in radialer Richtung, also nach außen hin, geöffnet ist. Diese Nut ist in Umfangsrichtung umlaufend, insbesondere unterbrechungsfrei umlaufend, ausgeführt.

In dieser Nut ist eine erste Dichtung, insbesondere O-Ring, aufgenommen. Die am Außenumfang hervorragt. Beim Aufsetzen der Abdeckhaube 11 wird diese erste Dichtung 6 elastisch verformt und somit eine dichte Verbindung zwischen der Adapterplatte 8 und der Abdeckhaube 11 bewirkt.

Die Auflagefläche 2 ist eben ausgeformt, wobei die zugehörige Normalenrichtung, also die Richtung der Normale der die Auflagefläche 2 enthaltenden Ebene, parallel zur Richtung der Drehachse der Welle 3 ausgerichtet ist.

Die Welle 3 ist mittels zumindest eines Lagers drehbar gelagert, welches im Gehäuse 1 aufgenommen ist. Im Gehäuse 1 ist außerdem ein Wellendichtring 15 aufgenommen, welcher zur Welle 3 hin einen ölbefüllten Innenraumbereich des Getriebes des Antriebs abdichtet. das Gehäuse abdichtet. Selbst wenn jedoch dieser Wellendichtring 15 undicht wäre, würde das entsprechende Leckage-Öl nur in den von der Abdeckhaube 11 umgebenen Bereich vordringen. Denn dieser Bereich ist von der ersten und zweiten Dichtung (4, 6) zur Umgebung hin abgedichtet. Dies gilt auch dann, wenn zwischen Adapterplatte 8 und der Auflagefläche 2 ein Spalt ausgebildet wäre und/oder zwischen der Abdeckhaube 11 und der Auflagefläche 2 ein Spalt ausgebildet wäre.

Die Adapterplatte 8 ist vorzugsweise als Kunststoffspritzgussteil ausgeführt. Die Abdeckhaube11 ist vorzugsweise als Kunststoffspritzgussteil ausgeführt.

Der Außenumfang der Adapterplatte 8 gleicht einem gerundeten Quadrat, das an einer ersten Seite eine Auskragung 5 aufweist, insbesondere also in radialer Richtung hervorragt.

An der gegenüberliegenden Seite ragt der Außenumfang weniger in radialer Richtung hervor als an der ersten Seite.

Ebenso ragt der Außenumfang an den beiden weiteren Seiten weniger in radialer Richtung hervor als an der ersten Seite.

Die Auflagefläche 2 ist an einer Seite begrenzt durch einen in Normalenrichtung zur Auflagefläche 2 domartig sich erhebenden Teilbereich des Gehäuses 1. Somit wird die Abdeckhaube 11 beim Aufstecken zwischen dem domartige sich erhebenden Teilbereich 16 und der ersten Dichtung im Bereich der Auskragung 5 eingefädelt. Das Aufsetzen ist somit besonders schnell und einfach realisierbar.

Die Adapterplatte 8 weist durchgehende, insbesondere axial durchgehende, Ausnehmungen auf. Diese Ausnehmungen liegen aber radial innerhalb der ersten und zweiten Dichtung (4, 6). Somit ist die Adapterplatte 8 materialsparend und elastisch ausgeführt und trotzdem die Dichtheit sichergestellt.

Bei weiteren erfindungsgemäßen Ausführungsbeispielen wird am Laschenbereich 14 eine mit zunehmendem Radialabstand zur Drehachse der Welle 3 zunehmende Wandstärke ausgeführt, insbesondere wobei ein von der Auflagefläche 2 abgewandter Oberflächenbereich des Laschenbereichs 14 im entspannten Zustand der Abdeckhaube 11, insbesondere also vor dem Aufsetzen auf die und Verbinden mit der Adapterplatte 11, als ebene Fläche ausgeformt ist, welche parallel zur an der Abdeckhaube 11 zur Berührung mit der Auflagefläche 2 vorgesehenen Berührfläche ist. Somit wird beim Aufstecken der Abdeckhaube 11 auf die Auflagefläche 2 und nachfolgendem Anziehen der Schraube 13 der Laschenbereich derart angedrückt und elastisch verformt, dass die Abdeckhaube mit ihrer Berührfläche vollständig und spaltfrei an der Auflagefläche 2 anliegt.

### Bezugszeichenliste

1 Gehäuse
2 Auflagefläche, insbesondere ebene Fläche
3 Welle, insbesondere Hohlwelle
4 zweite Dichtung
5 Auskragung
6 erste Dichtung
7 Schraube
8 Adapterplatte
9 Schraube
10 Schrumpfscheibe
11 Abdeckhaube
12 Zahnscheibe
13 Schraube
14 Laschenbereich, hervorragend an der Abdeckhaube

## Patentansprüche

1. Antrieb mit einem Gehäuse (1), einer Adapterplatte und einer Abdeckhaube (11),
wobei am Gehäuse (1) eine ebene Auflagefläche (2) ausgebildet ist, insbesondere zum Auflegen der Abdeckhaube (11),
wobei die Adapterplatte am Gehäuse (1) befestigt ist,
wobei eine erste Dichtung (6), insbesondere O-Ring, am Außenumfang der Adapterplatte (8) aufgenommen ist und zwischen der Abdeckhaube (11) und der Adapterplatte (8) angeordnet ist, insbesondere zur Abdichtung,
wobei eine zweite Dichtung (4) insbesondere O-Ring oder Flachdichtung, an der der Auflagefläche (2) zugewandten Seite der Adapterplatte (8) aufgenommen und/oder befestigt ist,
wobei die zweite Dichtung (4) zwischen der Adapterplatte (8) und der Auflagefläche (2) angeordnet ist, insbesondere zur Abdichtung.

2. Antrieb nach Anspruch 1,
**dadurch gekennzeichnet, dass**
der Antrieb ein von einem Elektromotor angetriebenes Getriebe umfasst,
insbesondere wobei das Gehäuse (1) gehäusebildend für den Elektromotor und das Getriebe ist.

3. Antrieb nach einem der vorangegangenen Ansprüche,
**dadurch gekennzeichnet, dass**
eine Welle (3) des Antriebs in einen von der Abdeckhaube (11) umgebenen Raumbereich hineinragt,
insbesondere wobei die Welle (3) die abtreibende Welle (3) des Getriebes ist.

4. Antrieb nach Anspruch 3,
**dadurch gekennzeichnet, dass**
die Welle (3) durch eine Ausnehmung des Gehäuses (1) und/oder durch eine Ausnehmung der Adapterplatte hindurchragt,
und/oder dass
eine auf die Welle (3) aufgesteckte Schrumpfscheibe (10) die Welle (3) mit einer in die Welle (3) eingesteckten weiteren Welle (3) kraftschlüssig verbindet,
insbesondere wobei die Schrumpfscheibe (10) in dem von der Abdeckhaube (11) umgebenen Raumbereich angeordnet ist.

5. Antrieb nach einem der vorangegangenen Ansprüche,
**dadurch gekennzeichnet, dass**
die Adapterplatte als Kunststoffspritzgussteil gefertigt ist
und/oder dass
die Abdeckhaube (11) als Kunststoffspritzgussteil gefertigt ist.

6. Antrieb nach einem der vorangegangenen Ansprüche,
**dadurch gekennzeichnet, dass**
die Adapterplatte von Schraubenköpfen von in Gewindebohrungen der Auflagefläche (2) eingeschraubten, durch die Adapterplatte durchgehenden Schrauben (7, 9 13) zur Auflagefläche (2) hingedrückt ist,
insbesondere wobei das von den Gewindebohrungen gebildete Bohrbild eine diskrete Rotationssymmetrie aufweist, insbesondere welche die Adapterplatte nicht aufweist, insbesondere wobei die Adapterplatte eine Vorzugsrichtung aufweist, entlang derer die Adapterplatte ihre größte Ausdehnung hat,
insbesondere wobei die Vorzugsrichtung parallel zu der die an der Abdeckhaube (11) vorgesehene, insbesondere bewirkte, Berührfläche enthaltenden Ebene ausgerichtet ist.

7. Antrieb nach einem der vorangegangenen Ansprüche,
**dadurch gekennzeichnet, dass**
die Adapterplatte voneinander beabstandete, durch die Adapterplatte, insbesondere in Normalenrichtung zur die an der Abdeckhaube (11) vorgesehene, insbesondere bewirkte, Berührfläche enthaltenden Ebene, durchgehende Ausnehmungen aufweist,
insbesondere wobei in Umfangsrichtung zwischen den Ausnehmungen die die Adapterplatte zur Auflagefläche (2) hindrückenden Schrauben (7, 9 13) angeordnet sind.

8. Antrieb nach einem der vorangegangenen Ansprüche,
**dadurch gekennzeichnet, dass**
die erste Dichtung (6) in einer am Außenumfang der Adapterplatte eingebrachten ersten Nut, insbesondere in Umfangsrichtung ununterbrochen verlaufenden ersten Nut, aufgenommen ist,
insbesondere wobei die erste Nut nach radial außen geöffnet ist und/oder wobei die erste Dichtung (6) nach radial außen aus der ersten Nut hervorragt.

9. Antrieb nach einem der vorangegangenen Ansprüche,
**dadurch gekennzeichnet, dass**
die zweite Dichtung (4) in einer an der der Auflagefläche (2) zugewandten Seite der Adapterplatte eingebrachten zweiten Nut aufgenommen ist, welche in Umfangsrichtung ununterbrochen verläuft,
wobei die zweite Nut zur Auflagefläche (2) hin geöffnet ist und /oder wobei die zweite Dichtung (4) aus der zweiten Nut zur Auflagefläche (2) hin hervorragt.

10. Antrieb nach einem der vorangegangenen Ansprüche,
**dadurch gekennzeichnet, dass**
an der Abdeckhaube (11) ein radial hervorragender Laschenbereich (14) ausgeformt ist,
durch welchen eine Schraube (7, 9 13) hindurchragt, deren Gewindebereich in eine in die Auflagefläche (2) eingebrachte Gewindebohrung eingeschraubt ist und deren Schraubenkopf den Laschenbereich (14) zur Auflagefläche (2) hindrückt.

11. Antrieb nach Anspruch 10,
**dadurch gekennzeichnet, dass**
der Laschenbereich (14) eine mit zunehmendem Radialabstand zur Drehachse der Welle (3) zunehmende Wandstärke aufweist,
insbesondere wobei ein von der Auflagefläche (2) abgewandter Oberflächenbereich des Laschenbereichs (14) im entspannten Zustand der Abdeckhaube (11), insbesondere also vor dem Aufsetzen auf die und Verbinden mit der Adapterplatte, als ebene Fläche ausgeformt ist, welche parallel zur an der Abdeckhaube (11) zur Berührung mit der Auflagefläche (2) vorgesehenen Berührfläche ausgerichtet ist,
insbesondere wobei beim Aufstecken der Abdeckhaube (11) auf die Auflagefläche (2) und nachfolgendem Anziehen der Schraube (7, 9 13) der Laschenbereich (14) derart angedrückt und elastisch verformt wird, dass die Abdeckhaube (11) mit ihrer Berührfläche an der Auflagefläche (2) anliegt.

12. Antrieb nach einem der vorangegangenen Ansprüche,
**dadurch gekennzeichnet, dass**
die Adapterplatte eine radial hervorragende Auskragung (5) aufweist,
wobei ein Randbereich der Abdeckhaube (11) zwischen der Auskragung (5) und einer die Auflagefläche (2) begrenzenden domartigen Erhebung des Gehäuseteils eingefädelt und aufgenommen ist.

13. Antrieb nach Anspruch 12,
**dadurch gekennzeichnet, dass**
die Adapterplatte in dem, insbesondere bezogen auf die Drehachse der Welle (3), von der Auskragung (5) überdeckten Umfangswinkelbereich den größten Durchmesser aufweist, insbesondere innerhalb einer Ebene, deren Normale parallel zur Drehachse der Welle (3) ausgerichtet ist.

14. Antrieb nach einem der vorangegangenen Ansprüche,
**dadurch gekennzeichnet, dass**
der insbesondere über die Axiale Erstreckung der Adapterplatte gemessene, maximale Radialabstand, insbesondere zur Drehachse der Welle (3), der Adapterplatte als Funktion des Umfangswinkels, insbesondere innerhalb einer oder der Ebene, deren Normale parallel zur Drehachse der Welle (3) ausgerichtet ist, ein absolutes und mehrere lokale Maxima aufweist, insbesondere im Bereich zwischen 0° und 360°,
wobei jeweils zwei in Umfangsrichtung zueinander nächstbenachbarte Maxima einen Winkelabstand von jeweils 45° zueinander aufweisen,
insbesondere ein absolutes und sieben lokale Maxima, wobei zwei jeweils in Umfangsrichtung zueinander nächstbenachbarte Maxima einen Winkelabstand von 45° zueinander aufweisen.

15. Antrieb nach einem der vorangegangenen Ansprüche,
**dadurch gekennzeichnet, dass**
die erste Dichtung (6) in Umfangsrichtung vollständig umlaufend und/oder in Umfangsrichtung ununterbrochen an der Abdeckhaube (11) anliegt.

## Claims

1. A drive having a housing (1), an adaptor plate and a covering hood (11),
wherein
a plane bearing surface (2) is formed at the housing (1), in particular for the placing of the covering hood thereon (11),
wherein the adaptor plate (8) is secured to the housing (1),
wherein a first seal (6), in particular an O-ring, is received at the outer circumference of the adaptor plate and is arranged between the covering hood (11) and the adapter plate (8), in particular for sealing,
wherein a second seal (4), in particular an O-ring or a flat seal, is received and/or secured at that side of the adaptor plate (8) facing the bearing surface (2),
wherein the second seal (4) is arranged between the adaptor plate (8) and the bearing surface (2), in particular for sealing.

2. A drive according to claim 1,
**characterised in that**
the drive comprises a gear unit driven by an electric motor,
in particular wherein the housing (1) forms a housing for the electric motor and the gear unit.

3. A drive according to any one of the preceding claims,
**characterised in that**
a shaft (3) of the drive projects into a spatial region surrounded by the covering hood (11),
in particular wherein the shaft (3) is the output shaft (3) of the gear unit.

4. A drive according to claim 3,
**characterised in that**
the shaft (3) projects through an opening of the housing (1) and/or through an opening of the adaptor plate,
and/or **in that**
a shrink disc (10) put onto the shaft (3) connects, in a force-locked manner, the shaft (3) to a further shaft (3) inserted into the shaft (3),
in particular wherein the shrink disc (10) is arranged in the spatial region surrounded by the covering hood (11).

5. A drive according to any one of the preceding claims,
**characterised in that**
the adaptor plate is manufactured as a plastics injection-moulded part,
and/or **in that**
the covering hood (11) is manufactured as a plastics injection-moulded part.

6. A drive according to any one of the preceding claims,
**characterised in that**
the adaptor plate is pressed towards the bearing surface (2) by screw heads of screws (7, 9, 13) which are screwed into tapped bores of the bearing surface (2) and which pass through the adaptor plate,
in particular wherein the boring pattern formed by the tapped bores has a discrete rotational symmetry, in particular which the adaptor plate does not have, in particular wherein the adaptor plate has a preferred direction along which the adaptor plate has its greatest extension,
in particular wherein the preferred direction is oriented parallel to the plane containing the contact surface which is provided, in particular brought about, at the covering hood.

7. A drive according to any one of the preceding claims,
**characterised in that**
the adaptor plate has through openings which are spaced apart from one another, pass through the adaptor plate, in particular in a normal direction to the plane containing the contact surface provided, in particular brought about, at the covering hood (11),
in particular wherein the screws (7, 9, 13) pressing the adaptor plate towards the bearing surface (2) are arranged between the openings in a circumferential direction.

8. A drive according to any one of the preceding claims,
**characterised in that**
the first seal (6) is received in a first groove made at the outer circumference of the adaptor plate, in particular a first groove running in an uninterrupted manner in a circumferential direction,
in particular wherein the first groove is open radially outwards and/or wherein the first seal (6) projects radially outwards from the first groove.

9. A drive according to any one of the preceding claims,
**characterised in that**
the second seal (4) is received in a second groove made at that side of the adaptor plate facing the bearing surface (2), which second groove runs in an uninterrupted manner in a circumferential direction,
wherein the second groove is open towards the bearing surface (2) and/or wherein the second seal (4) projects from the second groove towards the bearing surface (2).

10. A drive according to any one of the preceding claims,
**characterised in that**
a radially projecting lug region (14) is formed at the covering hood (11),
through which there projects a screw (7, 9, 13) whose threaded region is screwed into a tapped bore made in the bearing surface (2) and whose screw head presses the lug region (14) towards the bearing surface (2).

11. A drive according to claim 10,
**characterised in that**
the lug region (14) has a wall thickness which increases as the radial distance from the rotational axis of the shaft (3) increases,
in particular wherein a surface region, remote from the bearing surface (2), of the lug region (14) is in the form of a plane surface in the unstressed state of the covering hood (11), in particular therefore before the placement on the adaptor plate and connection thereto, which plane surface is oriented parallel to the contact surface provided at the covering hood (11) for contact with the bearing surface (2),
in particular wherein upon placement of the covering hood (11) onto the bearing surface (2) and subsequent tightening of the screw (7, 9, 13), the lug region (14) is pressed on and elastically deformed in such a manner that the covering hood (11) rests against the bearing surface (2) by means of its contact surface.

12. A drive according to any one of the preceding claims,
**characterised in that**
the adaptor plate has a radially projecting projection (5),
wherein an edge region of the covering hood (11) is inserted and received between the projection (5) and a dome-like elevation, bounding the bearing surface (2), of the housing part.

13. A drive according to claim 12,
**characterised in that**
the adaptor plate has the largest diameter in the circumferential angular region covered by the projection (5), in particular related to the rotational axis of the shaft (3), in particular within a plane whose normal is oriented parallel to the rotational axis of the shaft (3).

14. A drive according to any one of the preceding claims,
**characterised in that**
the maximum radial distance of the adaptor plate, measured in particular over the axial extension of the adaptor plate, in particular from the rotational axis of the shaft (3), as a function of the circumferential angle, in particular within a/the plane whose normal is oriented parallel to the rotational axis of the shaft (3), has an absolute and a plurality of local maximums, in particular in the range between 0° and 360°,
wherein in each case two maximums next adjacent to one another in a circumferential direction each have an angular distance of 45° from one another,
in particular an absolute and seven local maximums, wherein two maximums each next adjacent to one another in a circumferential direction have an angular distance of 45° from one another.

15. A drive according to any one of the preceding claims,
**characterised in that**
the first seal (6) contacts the covering hood (11) in a fully encircling manner in a circumferential direction and/or in an uninterrupted manner in a circumferential direction.

## Revendications

1. Entraînement comprenant un carter (1), une platine d'adaptation et un capot (11),
une surface plane d'appui (2) étant façonnée sur le carter (1), notamment en vue de la mise en place du capot (11),
la platine d'adaptation (8) étant fixée audit carter (1),
sachant qu'une première garniture d'étanchement (6), en particulier une bague torique, est implantée sur le pourtour extérieur de la platine d'adaptation (8) et est interposée entre le capot (11) et ladite platine d'adaption (8), notamment en vue d'assurer l'étanchéité, sachant qu'une seconde garniture d'étanchement (4), en particulier une bague torique ou un joint aplati, est implantée et/ou fixée du côté de la platine d'adaptation (8) tourné vers la surface d'appui (2),
laquelle seconde garniture d'étanchement (4) est interposée entre ladite platine d'adaptation (8) et ladite surface d'appui (2), notamment en vue d'assurer l'étanchéité.

2. Entraînement selon la revendication 1,
**caractérisé par le fait que**
ledit entraînement inclut une transmission entraînée par un moteur électrique,
sachant notamment que le carter (1) forme une enceinte dédiée audit moteur électrique et à ladite transmission.

3. Entraînement selon l'une des revendications précédentes,
**caractérisé par le fait**
**qu'**un arbre (3) dudit entraînement pénètre dans une zone spatiale ceinturée par le capot (11),
ledit arbre (3) constituant, en particulier, l'arbre de sortie (3) de la transmission.

4. Entraînement selon la revendication 3,
**caractérisé par le fait que**
l'arbre (3) traverse intégralement un évidement du carter (1) et/ou un évidement de la platine d'adaptation ;
et/ou **par le fait**
**qu'**une frette de serrage (10) emboîtée sur l'arbre (3) relie ledit arbre (3), par engagement positif, à un arbre supplémentaire (3) emboîté dans ledit arbre (3),
laquelle frette de serrage (10) est logée, en particulier, dans la zone spatiale ceinturée par le capot (11).

5. Entraînement selon l'une des revendications précédentes,
**caractérisé par le fait que**
la platine d'adaptation est produite en tant que pièce en matière plastique moulée par injection ;
et/ou **par le fait que**
le capot (11) est produit en tant que pièce en matière plastique moulée par injection.

6. Entraînement selon l'une des revendications précédentes,
**caractérisé par le fait que**
la platine d'adaptation est pressée en direction de la surface d'appui (2) par des têtes de vis (7, 9 13) traversant intégralement ladite platine d'adaptation et vissées dans des perçages taraudés de ladite surface d'appui (2),
sachant, en particulier, que le gabarit de perçage formé par lesdits perçages taraudés présente une symétrie de rotation discrète dont la platine d'adaptation est notamment dépourvue,
laquelle platine d'adaptation présente, en particulier, une direction préférentielle le long de laquelle ladite platine d'adaptation offre son étendue maximale, sachant, en particulier, que ladite direction préférentielle est orientée parallèlement au plan contenant la surface de contact prévue et notamment concrétisée sur le capot (11).

7. Entraînement selon l'une des revendications précédentes,
**caractérisé par le fait que**
la platine d'adaptation est munie d'évidements distants les uns des autres, qui traversent intégralement ladite platine d'adaptation, en particulier dans la direction normale au plan contenant la surface de contact prévue et notamment concrétisée sur le capot (11),
sachant en particulier que les vis (7, 9 13), pressant ladite platine d'adaptation en direction de la surface d'appui (2), sont disposées entre lesdits évidements dans la direction du pourtour.

8. Entraînement selon l'une des revendications précédentes,
**caractérisé par le fait que**
la première garniture d'étanchement (6) est implantée dans une première rainure pratiquée sur le pourtour extérieur de la platine d'adaptation, notamment une première rainure au tracé ininterrompu dans la direction du pourtour,
sachant notamment que ladite première rainure est ouverte vers l'extérieur dans le sens radial et/ou sachant que ladite première garniture d'étanchement (6) fait saillie radialement, vers l'extérieur, au-delà de ladite première rainure.

9. Entraînement selon l'une des revendications précédentes,
**caractérisé par le fait que**
la seconde garniture d'étanchement (4) est implantée dans une seconde rainure au tracé ininterrompu dans la direction du pourtour, pratiquée du côté de la platine d'adaptation tourné vers la surface d'appui (2),
sachant que ladite seconde rainure est ouverte en direction de ladite surface d'appui (2) et/ou sachant que ladite seconde garniture d'étanchement (4) fait saillie au-delà de ladite seconde rainure, en direction de ladite surface d'appui (2).

10. Entraînement selon l'une des revendications précédentes,
**caractérisé par**
la présence, sur le capot (11), d'une région (14) formant languette qui fait saillie dans le sens radial
et est traversée, intégralement, par une vis (7, 9 13) dont la zone filetée est vissée dans un perçage taraudé pratiqué dans la surface d'appui (2), et dont la tête presse ladite région (14) formant languette en direction de ladite surface d'appui (2).

11. Entraînement selon la revendication 10,
**caractérisé par le fait que**
la région (14) formant languette présente une épaisseur de paroi croissant au fur et à mesure de l'augmentation de la distance radiale par rapport à l'axe de rotation de l'arbre (3),
sachant en particulier qu'à l'état soulagé du capot (11), c'est-à-dire notamment avant la mise en place sur la platine d'adaptation et la liaison avec cette dernière, une zone de la surface de ladite région (14) formant languette, tournée à l'opposé de la surface d'appui (2), est configurée en tant que surface plane orientée parallèlement à la surface de contact prévue, sur ledit capot (11), pour venir au contact de ladite surface d'appui (2),
sachant notamment que, lors de la mise en place du capot (11) sur la surface d'appui (2) et lors du serrage consécutif de la vis (7, 9 13), ladite région (14) formant languette est pressée et déformée élastiquement de façon telle que ledit capot (11) soit en applique, par sa surface de contact, contre ladite surface d'appui (2).

12. Entraînement selon l'une des revendications précédentes,
**caractérisé par le fait que**
la platine d'adaptation est dotée d'une protubérance (5) radialement en saillie,
une région marginale du capot (11) étant insérée et intégrée entre ladite protubérance (5) et une zone rehaussée de la partie formant carter, du type dôme, qui délimite la surface d'appui (2).

13. Entraînement selon la revendication 12,
**caractérisé par le fait que**
la platine d'adaptation offre le plus grand diamètre dans la plage d'angles périphériques couverte par la protubérance (5), en particulier par rapport à l'axe de rotation de l'arbre (3), notamment à l'intérieur d'un plan dont la normale est parallèle audit axe de rotation de l'arbre (3).

14. Entraînement selon l'une des revendications précédentes,
**caractérisé par le fait que**
la distance radiale maximale séparant notamment la platine d'adaptation d'avec l'axe de rotation de l'arbre (3), mesurée en particulier sur l'étendue axiale de ladite platine d'adaptation, présente un maximum absolu et plusieurs maxima localisés, notamment dans la plage comprise entre 0° et 360° en fonction de l'angle périphérique, en particulier à l'intérieur d'un plan, ou du plan dont la normale et orientée parallèlement audit axe de rotation de l'arbre (3),
deux maxima respectivement les plus proches l'un de l'autre, dans la direction du pourtour, présentant alors un espacement angulaire mutuel respectif de 45°,
en particulier un maximum absolu et sept maxima localisés, sachant que deux maxima respectivement les plus proches l'un de l'autre, dans la direction du pourtour, présentent un espacement angulaire mutuel de 45°.

15. Entraînement selon l'une des revendications précédentes,
**caractérisé par le fait que**
la première garniture d'étanchement (6) est en applique, contre le capot (11), avec étendue périphérique intégrale dans la direction du pourtour et/ou sans discontinuité dans ladite direction du pourtour.
